# EUROPÄISCHE PATENTSCHRIFT

(11) **EP 2 547 989 B1**
(45) Veröffentlichungstag und Bekanntmachung des Hinweises auf die Patenterteilung: **26.03.2014**
(21) Anmeldenummer: 11717457.3
(22) Anmeldetag: 18.02.2011
(51) Int. Cl.: G01G 23/01

(54) **VERFAHREN UND VORRICHTUNG ZUR JUSTIERUNG EINER WIEGEEINRICHTUNG**
METHOD AND DEVICE FOR ADJUSTING A WEIGHING APPARATUS
PROCÉDÉ ET DISPOSITIF PERMETTANT D'AJUSTER UN DISPOSITIF DE PESÉE

(30) Priorität: 15.03.2010 DE 102010012640
(43) Veröffentlichungstag der Anmeldung: 23.01.2013
(73) Patentinhaber: seca ag, 4153 Reinach BL 1 (CH)
(72) Erfinder: PANIER, Holger, 22967 Tremsbüttel (DE); JENSEN, Björn, 22043 Hamburg (DE)
(74) Vertreter: Klickow, Hans-Henning
(86) Internationale Anmeldenummer: PCT/DE2011/000166
(87) Internationale Veröffentlichungsnummer: WO 2011/113409

(56) Entgegenhaltungen:
- GB-A- 2 288 243
- JP-A- 2004 325 139
- US-A1- 2002 052 703

## Beschreibung

Die Erfindung betrifft ein Verfahren zur Justierung einer Wiegeeinrichtung, wobei ein von der Wiegeeinrichtung angezeigtes Gewicht an die im Bereich eines Aufstellungsortes der Wiegeeinrichtung herrschende Gravitation angepasst wird, sowie bei dem die Anpassung unter Verwendung eines von der Wiegeeinrichtung auswertbaren Codes durchgeführt wird.

Die Erfindung betrifft darüber hinaus eine Wiegeeinrichtung mit einer Vorrichtung zur Justierung, die ein von der Wiegeeinrichtung angezeigtes Gewicht an die im Bereich eines Aufstellungsortes der Wiegeeinrichtung herrschende Gravitation anpasst, und bei der die Vorrichtung eine Eingabeeinrichtung für einen Code und eine Auswertungseinrichtung zur Umsetzung des Codes in einen Korrekturfaktor aufweist, der das angezeigte Gewicht an die lokal herrschende Gravitation anpasst.

Derartige Wiegeeinrichtungen sind typischerweise als eine Waage ausgebildet und können zum Wiegen von Personen oder Gegenständen verwendet werden. Für Waagen, die im medizinischen Bereich verwendet werden, ist eine Justierung und gegebenenfalls eine Eichung erforderlich.

Das von der Waage angezeigte Gewicht ist sowohl von der Masse des zu wiegenden Objektes als auch von der lokalen Erdanziehung abhängig. Die Erdanziehung ist dabei nicht an jedem Ort der Erdoberfläche konstant, sondern variiert lokal in einem Umfang, dass Abweichungen innerhalb der vorgesehenen Meßauflösung für das Gewicht auftreten.

Gemäß dem Stand der Technik kann die am vorgesehenen Aufstellungsort herrschende Erdanziehung durch unterschiedliche Maßnahmen berücksichtigt werden. Zum einen ist es möglich, eine individuelle Fertigung der Waage unter Berücksichtigung des vorgesehenen Aufstellungsortes durchzuführen. Hieraus resultieren vergleichsweise hohe Fertigungskosten. Gemäß einer anderen Variante ist es möglich, die Waage gemäß einem vorgegebenen Standard zu fertigen und am tatsächlichen Betriebsort neu zu justieren und gegebenenfalls zu eichen. Hieraus resultieren hohe Kosten beim Nutzer der Waage und häufig hohe zeitliche Verzögerungen, um die Waage in Betrieb nehmen zu können.

Gemäß einem automatisierten Verfahren ist es bekannt, die Waage mit einem GPS-Empfänger auszustatten und hierdurch den tatsächlichen Aufstellungsort zu ermitteln. Die lokale Erdbeschleunigung kann dann nach einer Näherungsformel ermittelt werden oder aus einer abgespeicherten Tabelle ausgelesen werden. Auch dieses Verfahren führt zu hohen Herstellkosten und setzt die Möglichkeit zur Herstellung einer Satellitenverbindung voraus.

Ein einfacheres Verfahren besteht darin, die geographische Position manuell einzugeben und die lokale Erdbeschleunigung über eine Näherungsformel zu errechnen. Ein derartiges Verfahren führt bei Eingabefehlern zu falschen Messungen und ermöglicht darüber hinaus eine bewußte Manipulation der angezeigten Werte. Ein Einsatz unter Eichbedingungen ist dabei nicht möglich.

Auch bei einem ebenfalls denkbaren Einscannen von Daten des Aufstellungsortes und einer anschließenden Berechnung der Erdbeschleunigung unter Verwendung einer Näherungsformel ergeben sich die gleichen Nachteile wie vorstehend bereits für die manuelle Eingabe erläutert.

Aus der US 2002/052703 A1 ist bereits ein Verfahren zur Justierung einer Wiegeeinrichtung bekannt. Ein von der Wiegeeinrichtung angezeigtes Gewicht wird an die im Bereich eines Aufstellungsortes der Wiegeeinrichtung herrschende Gravitation angepasst. Die Anpassung wird unter Verwendung eines Codes durchgeführt.

Wiegeeinrichtungen zur Anzeige eines Gewichtes werden darüber hinaus in der GB 2288243 A sowie der JP 2004325139 A beschrieben.

Aufgabe der vorliegenden Erfindung ist, ein Verfahren der einleitend genannten Art derart anzugeben, dass eine einfache und manipulationssichere Justierung der Wiegeeinrichtung unterstützt wird.

Diese Aufgabe wird erfindungsgemäß dadurch gelöst, dass der Code mit einer Seriennummer der Wiegeeinrichtung verknüpft wird und dass der Code verschlüsselt wird.

Weitere Aufgabe der vorliegenden Erfindung ist es, eine Vorrichtung der einleitend genannten Art derart zu konstruieren, dass eine einfache und manipulationssichere Justierung der Wiegeeinrichtung unterstützt wird.

Diese Aufgabe wird erfindungsgemäß dadurch gelöst, dass der Code mit einer Seriennummer der Wiegeeinrichtung verknüpft ist und dass der Code verschlüsselt ist.

Durch die Justierung der Wiegeeinrichtung unter Verwendung eines eingebbaren Codes ist es möglich, die Fertigung der Waage universell und unabhängig vom vorgesehenen Aufstellungsort durchzuführen. Eine Adaption der Waage an die im Bereich der vorgesehenen Verwendung herrschende Erdanziehung erfolgt erst durch den Nutzer der Waage oder einen entsprechenden Händler.

Eine typische Ausführungsform wird dadurch bereitgestellt, dass der Code einem Wert für die am Verwendungsort herrschende lokale Erdbeschleunigung entspricht.

Eine Eichfähigkeit wird dadurch unterstützt, dass der Code individuell einer bestimmten Wiegeeinrichtung zugeordnet wird.

Zur Bereitstellung einer hohen Gebrauchssicherheit wird vorgeschlagen, dass ein manipulationssicherer Code verwendet wird.

Eine universelle Anwendbarkeit wird dadurch unterstützt, dass der Code manuell in die Wiegeeinrichtung eingegeben wird.

Ein erhöhter Bedienungskomfort kann dadurch erreicht werden, dass der Code elektronisch in die Wiegeeinrichtung eingegeben wird.

Eine weitere Verbesserung der Manipulationssicherheit kann dadurch erreicht werden, dass der Code exakt einmal in die Wiegeeinrichtung eingebbar ist.

In den Zeichnungen sind Ausführungsbeispiele der Erfindung schematisch dargestellt. Es zeigen:
- Figur 1: eine perspektivische Darstellung einer Babywaage,
- Figur 2: eine perspektivische Darstellung einer Personenwaage mit hochgesetztem Anzeige- und Bedienfeld,
- Figur 3: eine perspektivische Darstellung einer Bodenwaage,
- Figur 4: ein Ablaufdiagramm zur Veranschaulichung der Auswertung des Codes,
- Figur 5: ein Beispiel für eine vereinfachte Codeeingabe und
- Figur 6: ein Beispiel für eine komplexe Codeeingabe.

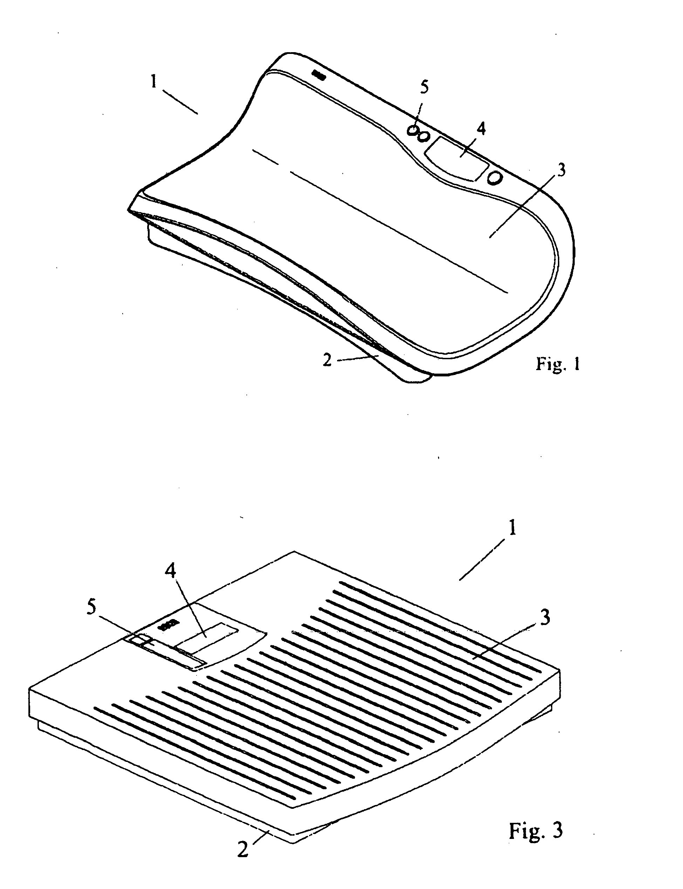

Figur 1 zeigt eine perspektivische Darstellung einer Wiegeeinrichtung (1). Die Wiegeeinrichtung ist bei diesem Ausführungsbeispiel als eine Babywaage ausgebildet. Die Wiegeeinrichtung (1) besteht im wesentlichen aus einem Basiselement (2) und einem Auflageelement (3). Zur Anzeige von Informationen, insbesondere zur Anzeige des gemessenen Gewichts, ist ein Display (4) vorgesehen. Eine Einstellung der Wiegeeinrichtung (1) kann unter Verwendung von Einstellelementen (5) erfolgen.

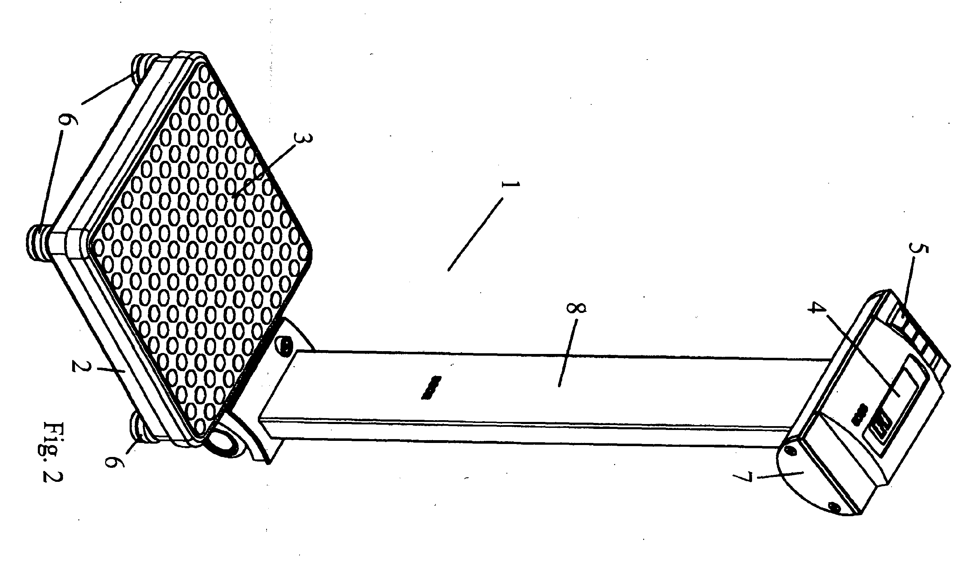

Die Ausführungsform gemäß Figur 2 zeigt eine Wiegeeinrichtung (1), bei der das Auflageelement (3) als Standfläche für eine zu wiegende Person ausgebildet ist. Zur Unterstützung einer waagerechten Ausrichtung steht das Basiselement (2) auf Füßen (6). Eine Bedienbarkeit wird dadurch unterstützt, dass das Display (4) und die Einstellelemente (5) im Bereich einer Konsole (7) angeordnet sind, die von einer Säule (8) getragen auf einer ergonomisch günstigen Sicht- und Bedienhöhe positioniert ist.

Figur 3 zeigt eine weitere Ausführungsform einer Wiegeeinrichtung (1), die als eine Bodenwaage ausgebildet ist. Auch hier sind ein Display (4) und Einstellelemente (5) vorgesehen.

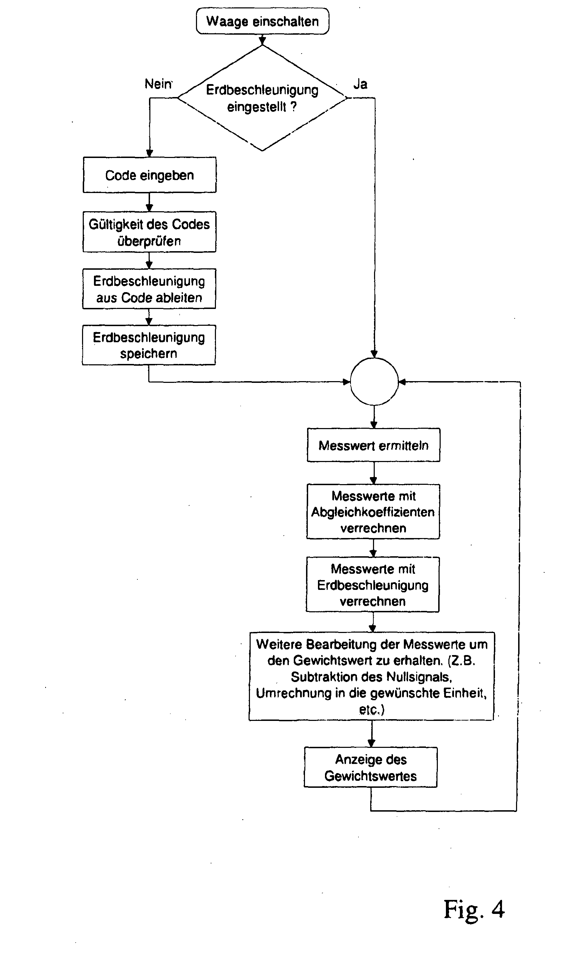

Figur 4 veranschaulicht den Funktionsablauf zur Anpassung der jeweiligen wiegeeinrichtung an einen lokal vorhandenen GAL-Wert. Diese Anpassung erfolgt typischerweise genau einmal bei einer ersten Inbetriebnahme der Wiegeeinrichtung (1). Nach jedem Einschalten der Wiegeeinrichtung (1) wird abgefragt, ob diese erstmalige Einstellung bereits erfolgt ist. Sollte dies nicht der Fall sein, so wird eine Eingabemöglichkeit für einen jeweiligen Code bereitgestellt und die Gültigkeit des Codes wird überprüft. Für den Fall eines gültigen Codes wird aus dem Code die Erdbeschleunigung abgeleitet und abgespeichert.

Ist eine derartige Einstellung bereits vorgenommen worden, so wird unmittelbar in den Meßvorgang übergegangen. Bei der Durchführung des Meßvorgangs wird der Meßwert ermittelt und der ermittelte Meßwert wird mit einem zugeordneten Abgleichkoeffizienten verrechnet. Anschließend erfolgt eine Verrechnung mit der bei der Auswertung des Codes ermittelten lokal gültigen Erdbeschleunigung.

Die hierdurch bereitgestellten Rohmeßwerte können einer nachfolgenden Bearbeitung unterworfen werden. Beispielsweise kann ein Nullsignal subtrahiert werden oder eine Umrechnung in die gewünschte Einheit erfolgen. Der ermittelte Meßwert wird dann im Bereich des Displays (4) angezeigt.

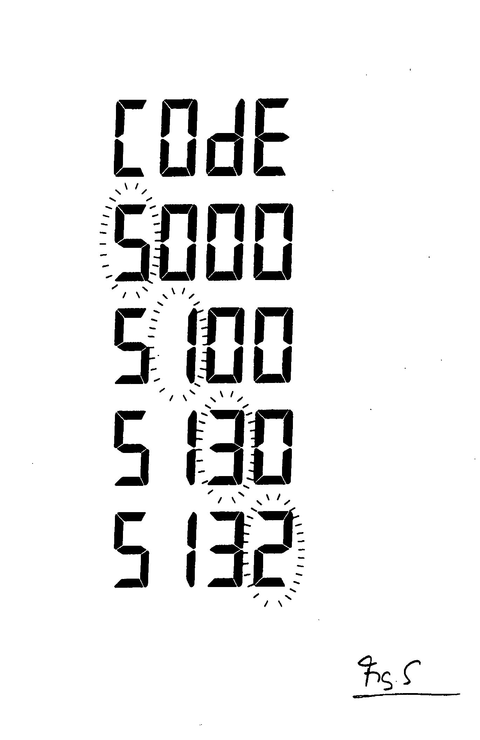

Figur 5 zeigt beispielhaft die sequenzielle Eingabe eines Codes.

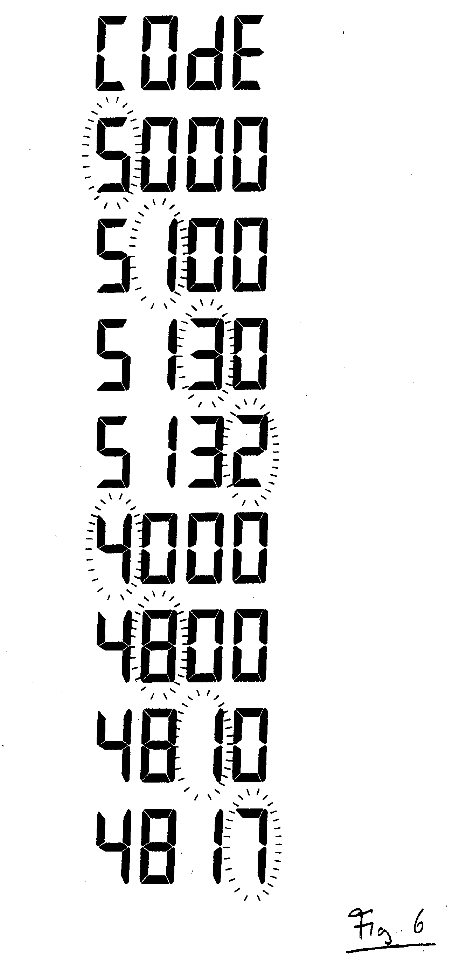

Bei der Ausführungsform gemäß Figur 6 erfolgt eine komplexe Codeeingabe, wobei zusätzlich beispielsweise die Seriennummer des betreffenden Gerätes eingegeben wird. Hierdurch wird eine erhöhte Eingabesicherheit bereitgestellt.

Alternativ oder ergänzend zu einer Einbeziehung der Seriennummer in den Code ist es auch möglich, eine Prüfsumme über die Seriennummer zu bilden und diese Prüfsumme in den Code aufzunehmen. Die Prüfsumme kann beispielsweise als CRC festgelegt werden. Die Einbeziehung der Prüfsumme in den Code ermöglicht es, den Code zu verkürzen und trotzdem eine Aktivierung einer Waage mit einem nicht dieser Waage zugeordneten Code zu verhindern. Dies gilt auch dann, wenn keine eindeutige Zuordnung zwischen dem Code und der Waage vorliegt.

Alternativ zur Eingabe des Codes manuell unter Verwendung des Displays (4) und/oder der Einstellelemente (5) ist es auch möglich, eine automatisierte Eingabe vorzunehmen. Dies kann beispielsweise unter Verwendung eines RFID-Chips erfolgen, der in die Wiegeeinrichtung (1) eingesetzt wird. Der RFID-Chip kann vom Hersteller oder vom autorisierten Händler mit dem Code oder auch nur mit dem betreffenden GAL-Wert beschrieben werden. Ein Manipulationsschutz kann durch Verwendung von Prüfsummen erfolgen. Typischerweise erfolgt eine einmalige Auslesung des RFID-Chips bei einer ersten Inbetriebnahme der Wiegeeinrichtung (1).

Weitere Ausführungsvarianten werden beispielsweise dadurch bereitgestellt, dass die Eingabe des Codes über einen PC erfolgt, der kabelgebunden oder drahtlos mit der Wiegeeinrichtung (1) verbunden ist. Ebenfalls ist eine Eingabe unter Verwendung einer BlueTooth-Verbindung, beispielsweise per Handy möglich. Eine weitere Ausführungsvariante besteht darin, die Wiegeeinrichtung (1) über das Internet mit einem autorisierten Kommunikationspartner zu verbinden und den Code auf diesem Wege an die Wiegeeinrichtung (1) zu übermitteln. Weitere Ausführungsvarianten bestehen in der Verwendung eines andersartigen Speichermediums für den Code, beispielsweise eines USB-Sticks oder einer Chipkarte. Darüber hinaus ist auch an die Verwendung von Scannern oder RFID-Lesegeräten gedacht. Ebenfalls ist eine Spracheingabe möglich. Eine schaltungstechnische Eingabe an der Wiegeeinrichtung (1) kann unter Verwendung von Steckbrücken erfolgen.

In Abhängigkeit von den vorstehend beschriebenen unterschiedlichen Varianten zur Eingabe des Codes in die Wiegeeinrichtung (1) bestehen unterschiedliche Möglichkeiten zur Bereitstellung des Codes. Der Code kann beispielsweise ausgedruckt und dem Lieferschein beigelegt werden. Ebenfalls ist es möglich, den Code auf der Verpackung der Wiegeeinrichtung vorzusehen. Gemäß einer anderen Variante wird der Code online bereitgestellt und durch den Nutzer wird zur Abfrage die Seriennummer des Gerätes oder die Lieferscheinnummer eingegeben.

Alternativ zu einer Eingabe durch den Endnutzer kann die Eingabe auch durch einen Händler erfolgen, der vom Hersteller den Code erhält und die Waage programmiert oder diesen an den jeweiligen Kunden weiterleitet. Die Abfrage des Codes ist ebenfalls per Telefon oder per SMS möglich. Der vorstehend bereits erwähnte RFID-Chip kann entweder erst am Nutzungsort in die Waage eingesetzt werden oder bereits herstellerseitig vorgesehen sein.

Eine Manipulationssicherheit des Codes bzw. der Einstellung der Waage in Abhängigkeit vom eingegebenen Code kann durch unterschiedliche Maßnahmen erfolgen. Eine Variante ist hierbei die vorstehend bereits beschriebene Einbeziehung der Seriennummer der Wiegeeinrichtung in den Code oder eine Einbeziehung einer andersartigen eindeutigen Kennung. Eine Einbeziehung der Seriennummer kann entweder unter Berücksichtigung der vollständigen Seriennummer oder einer aus der Seriennummer zu ermittelnden Prüfzahl erfolgen. Bei allen unterschiedlichen Varianten zur Bereitstellung des Codes kann dieser verschlüsselt werden.

Die Genauigkeit der Berücksichtigung der konkreten Erdbeschleunigung kann anwendungsabhängig vorgegeben werden. Insbesondere ist daran gedacht, die verfügbaren Werte für die Erdbeschleunigung derart zu quantisieren, dass der betreffende Wert durch die Addition eines Basiswertes und eines Differenzwertes erfolgt. Der Differenzwert ergibt sich hierbei durch die Multiplikation eines Bezugswertes und eines Anpassungsfaktors, wobei der Anpassungsfaktor eine ganze Zahl ist. Der Basiswert wird so gewählt, dass der erforderliche Bereich abgedeckt wird und der Bezugswert wird derart gewählt, dass die erforderliche Auflösung erreicht wird.

## Patentansprüche

1. Verfahren zur Justierung einer Wiegeeinrichtung (1), wobei ein von der Wiegeeinrichtung (1)angezeigtes Gewicht an die im Bereich eines Aufstellungsortes der Wiegeeinrichtung (1) herrschende Gravitation angepasst wird, sowie bei dem die Anpassung unter Verwendung eines von der Wiegeeinrichtung (1) auswertbaren Codes durchgeführt wird, **dadurch gekennzeichnet, dass** der Code mit einer Seriennummer der Wiegeeinrichtung (1) verknüpft wird und dass der Code verschlüsselt wird.

2. Verfahren nach Anspruch 1, **dadurch gekennzeichnet, dass** der Code einem Wert für die am Verwendungsort herrschende lokale Erdbeschleunigung entspricht.

3. Verfahren nach Anspruch 1 oder 2, **dadurch gekennzeichnet, dass** der Code individuell einer bestimmten Wiegeeinrichtung (1) zugeordnet wird.

4. Verfahren nach einem der Ansprüche 1 bis 3, **dadurch gekennzeichnet, dass** ein manipulationssicherer Code verwendet wird.

5. Verfahren nach einem der Ansprüche 1 bis 6, **dadurch gekennzeichnet, dass** der Code manuell in die Wiegeeinrichtung (1) eingegeben wird.

6. Verfahren nach einem der Ansprüche 1 bis 6, **dadurch gekennzeichnet, dass** der Code elektronisch in die Wiegeeinrichtung (1) eingegeben wird.

7. Verfahren nach einem der Ansprüche 1 bis 8, **dadurch gekennzeichnet, dass** der Code exakt einmal in die Wiegeeinrichtung (1) eingebbar ist.

8. Wiegeeinrichtung (1) mit einer Vorrichtung zur Justierung, die ein von der Wiegeeinrichtung (1) angezeigtes Gewicht an die im Bereich eines Aufstellungsortes der Wiegeeinrichtung (1) herrschende Gravitation anpasst, und bei der die Vorrichtung eine Eingabeeinrichtung für einen Code und eine Auswertungseinrichtung zur Umsetzung des Codes in einen Korrekturfaktor aufweist, der das angezeigte Gewicht an die lokal herrschende Gravitation anpasst, **dadurch gekennzeichnet, dass** der Code mit einer Seriennummer der Wiegeeinrichtung (1) verknüpft ist und dass der Code verschlüsselt ist.

## Claims

1. Method of adjusting a weighing apparatus (1), wherein a weight which is indicated by said weighing apparatus (1) is adapted to the gravitation prevailing in the area of a location in which said weighing apparatus (1) is set up, and wherein the adaptation is carried out using a code which can be analysed by said weighing apparatus (1), **characterised in that** the code is linked with a serial number belonging to the weighing apparatus (1) and that the code is encrypted.

2. Method according to Claim 1, **characterised in that** the code corresponds to a value for the local acceleration due to gravity prevailing at the location of use.

3. Method according to Claim 1 or 2, **characterised in that** the code is individually assigned to a specific weighing apparatus (1).

4. Method according to one of Claims 1 to 3, **characterised in that** a tamper-proof code is used.

5. Method according to one of Claims 1 to 6, **characterised in that** the code is entered manually into the weighing apparatus (1).

6. Method according to one of Claims 1 to 6, **characterised in that** the code is entered electronically into the weighing apparatus (1).

7. Method according to one of Claims 1 to 8, **characterised in that** the code can be entered exactly once into the weighing apparatus (1).

8. Weighing apparatus (1) having a device for adjustment which adapts a weight which is indicated by said weighing apparatus (1) to the gravitation prevailing in the area of a location in which said weighing apparatus (1) is set up, and wherein said device has an entering apparatus for a code and an analysing apparatus for converting the code into a correction factor which adapts the weight which is indicated to the locally prevailing gravitation, **characterised in that** the code is linked with a serial number belonging to the weighing device (1) and that the code is encrypted.

## Revendications

1. Procédé permettant d'ajuster un dispositif de pesée (1), sachant qu'un poids indiqué par le dispositif de pesée (1) est adapté à la gravitation qui règne dans la région d'un lieu d'installation du dispositif de pesée (1) et que l'adaptation est exécutée en utilisant un code qui peut être évalué par le dispositif de pesée (1), **caractérisé en ce que** le code est enchaîné avec un numéro de série du dispositif de pesée (1) et que le code est chiffré.

2. Procédé selon la revendication 1, **caractérisé en ce que** le code correspond à une valeur de l'accélération due à la gravité qui règne dans la région du lieu d'utilisation.

3. Procédé selon revendication 1 ou 2, **caractérisé en ce que** le code est individuellement associé à un dispositif de pesée déterminé (1).

4. Procédé selon l'une des revendications 1 à 3, **caractérisé en ce que** l'on utilise un code sécurisé contre les manipulations.

5. Procédé selon l'une des revendications 1 à 1, **caractérisé en ce que** le code est introduit manuellement dans le dispositif de pesée (1).

6. Procédé selon l'une des revendications 1 à 5, **caractérisé en ce que** le code est introduit électroniquement dans le dispositif de pesée (1).

7. Procédé selon l'une des revendications 1 à 6, **caractérisé en ce que** le code peut être introduit exactement une fois dans le dispositif de pesée (1).

8. Dispositif de pesée (1) avec un dispositif d'ajustage qui adapte un poids, indiqué par le dispositif de pesée (1). à la gravitation qui règne dans la région.
d'un lieu d'installation du dispositif de pesée (1), et dans lequel ledit dispositif est doté d'un dispositif d'introduction pour un code et d'un dispositif d'évaluation pour la conversion du code en un facteur de correction, qui adapte le poids indiqué à la gravitation locale, **caractérisé en ce que** le code est enchaîné avec un numéro de série du dispositif de pesée (1) et que le code est chiffré.
